# EUROPEAN PATENT APPLICATION

(11) **EP 2 821 449 A1**
(43) Date of publication of application: **07.01.2015**
(21) Application number: 14174115.7
(22) Date of filing: 26.06.2014
(51) Int. Cl.: C09D 127/12, F01D 5/28, C08K 3/00

(54) **Fluorinated Polymer Based Coatings and Methods for Applying the Same**

(30) Priority: 01.07.2013 US 201313932228
(71) Applicant: General Electric Company, Schenectady, New York 12345 (US)
(72) Inventor: Krishna, Kalaga Murali, 560066 Bangalore, Karnataka (IN); Parakala, Padmaja, 560066 Bangalore, Karnataka (IN); Pabla, Surinder Singh, Greenville, SC South Carolina 29615 (US); Anand, Krishnamurthy, 560066 Bangalore (IN)
(74) Representative: Szary, Anne Catherine

(57) **Abstract**

Fluorinated polymer based coatings include 60 weight percent to 90 weight percent of one or more fluorinated polymers, 1 weight percent to 7 weight percent of one or more erosion resistant fillers, 3 weight percent to 9 weight percent of one or more anticorrosive pigments, 1 weight percent to 4 weight percent of one or more thixotropic agents, and 1 weight percent to 4 weight percent of one or more porosity reducing filler materials.

## Description

### BACKGROUND OF THE INVENTION

The subject matter disclosed herein relates to coatings and, more specifically, to fluorinated polymer based coatings that can be applied to compressor blades of turbines.

In a gas turbine engine, the compressor section generally includes multiple stages that have a row of compressor blades (also referred to as "rotor blades" or "rotor airfoils") and stator blades (also referred to as "stator airfoils"). The compressor blades rotate about a rotor and, thus, impart kinetic energy to the airflow through the compressor. Directly following the row of compressor blades is a row of stator blades, which remain stationary. Acting in concert, the compressor blades and stator blades turn the airflow and slow the air velocity, respectively, which can increase the static pressure of the airflow through the compressor section. Multiple stages of compressors blades and stator blades can be stacked in an axial flow compressor to achieve the required discharge to inlet air pressure ratio. Compressor and stator blades can thus be secured to rotor wheels and the stator case, respectively, by means of a dovetail or root or base attachment.

In operations, compressor blades may be subject to mechanical stresses and harsh operating conditions because of the rotational velocity of the compressor. These levels of stress combined with the other operating conditions may affect the experienced levels of erosion or corrosion. For example, the ambient air pulled in through the compressor section can include constituents that may be corrosive and abrasive to the compressor blades and other such parts. Some components may further be subject to mixtures of hydrocarbon-based lubricating oils, carbonaceous soot, dirt, rust and the like.

Coatings such as polytetrafluoroethylenes (PTFEs) may be applied to articles such as compressor blades to provide additional protection against these elements. However, as coating thickness increases aerodynamic performance may be affected.

Accordingly, alternative fluorinated coatings would be welcome in the art.

### BRIEF DESCRIPTION OF THE INVENTION

In one embodiment, a coating is disclosed. The coating includes about 60 weight percent to about 90 weight percent of one or more fluorinated polymers, about 3 weight percent to about 5 weight percent of one or more erosion resistant fillers about 5 weight percent to about 7 weight percent of one or more anticorrosive pigments, about 1 weight percent to about 4 weight percent of one or more thixotropic agents, and, about 2 weight percent to about 3 weight percent of one or more porosity reducing filler materials.

In another embodiment, a coated article is disclosed. The coated article includes a substrate piece comprising an outer surface; and a coating covering at least a portion of the outer surface of the substrate piece. The coating includes about 60 weight percent to about 90 weight percent of one or more fluorinated polymers, about 1 weight percent to about 7 weight percent of one or more erosion resistant fillers, about 3 weight percent to about 9 weight percent of one or more anticorrosive pigments, about 1 weight percent to about 4 weight percent of one or more thixotropic agents, and, about 1 weight percent to about 4 weight percent of one or more porosity reducing filler materials.

In yet another embodiment, a method for coating a substrate with a coating is disclosed. The method includes applying a coating onto an outer surface of the substrate. The coating includes about 60 weight percent to about 90 weight percent of one or more fluorinated polymers, about 1 weight percent to about 7 weight percent of one or more erosion resistant fillers, about 3 weight percent to about 9 weight percent of one or more anticorrosive pigments, about 1 weight percent to about 4 weight percent of one or more thixotropic agents, about 1 weight percent to about 4 weight percent of one or more porosity reducing filler materials. The method further includes curing the coating on the outer surface of the substrate at a curing temperature of from about 50°C to about 300°C.

These and additional features provided by the embodiments discussed herein will be more fully understood in view of the following detailed description, in conjunction with the drawings.

### BRIEF DESCRIPTION OF THE DRAWINGS

The embodiments set forth in the drawings are illustrative and exemplary in nature and not intended to limit the inventions defined by the claims. The following detailed description of the illustrative embodiments can be understood when read in conjunction with the following drawings, where like structure is indicated with like reference numerals and in which:
FIG. 1 is a cross-sectional schematic illustration of a coating on a substrate according to one or more embodiments shown or described herein;
FIG. 2 is a cross-sectional schematic illustration of a coating on a substrate with a base coat there between according to one or more embodiments shown or described herein;
FIG. 3 is a perspective view of a compressor blade with a coating according to one or more embodiments shown or described herein; and,
FIG. 4 is an exemplary illustrate of a coating method according to one or more embodiments shown or described herein.

### DETAILED DESCRIPTION OF THE INVENTION

One or more specific embodiments of the present invention will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present invention, the articles "a," "an," "the," and "said" are intended to mean that there are one or more of the elements. The terms "comprising," "including," and "having" are intended to be inclusive and mean that there may be additional elements other than the listed elements.

Modified fluorinated polymeric coatings may be provided to protect underlying substrates from a variety of external forces and environmental conditions. Furthermore, by combining select additives with the fluorinated polymer(s) in regulated particle size distributions, a thin, smooth coating with high adhesion can be provided to protect the substrate without inhibiting aerodynamic performance. These coatings may be used both for new make articles or modifying applications (e.g., repair) to potentially promote longer and/or more efficient operational performance.

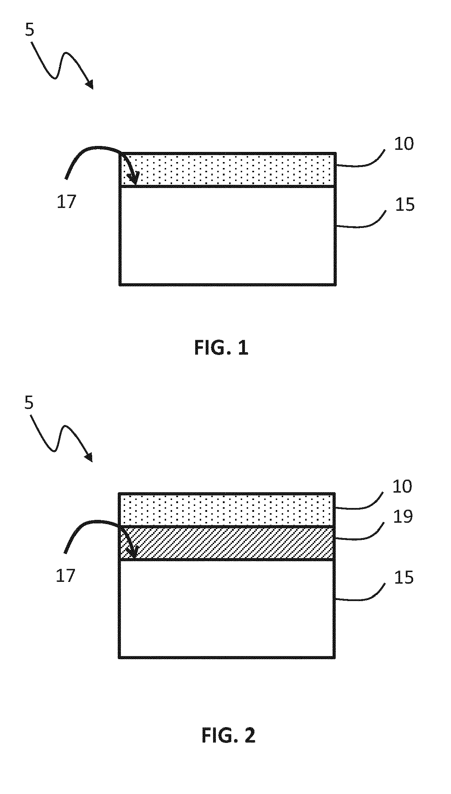

Referring now to FIG. 1, a schematic representation of a cross section of a coated article 5 is illustrated comprising at least a substrate 15 and a coating 10.

The coating 10 is formulated such that it withstands elevated temperatures, and has sufficient adhesion, porosity, surface roughness and hydrophobic and oleophobic properties to protect the underlying substrate 15 while still enabling at least sufficient operational performance. The coating can generally comprise about 60 weight percent to about 90 weight percent of one or more fluorinated polymers, about 1 weight percent to about 7 weight percent of one or more erosion resistant fillers, about 3 weight percent to about 9 weight percent of one or more anticorrosive pigments, about 1 weight percent to about 4 weight percent of one or more thixotropic agents, and about 1 weight percent to about 4 weight percent of one or more porosity reducing filler materials.

The fluorinated polymers of the coating 10 can comprise any one or more fluorocarbon based polymers. Exemplary fluorinated polymers include, but are not limited to, PTFE (polytetrafluoroethylene), PFA (perfluoroalkoxy polymer), ETFE (ethylene tetrafluoroethylene), PVDF (polyvinylidene fluoride) and PVF (polyvinyl fluoride). The one or more fluorinated polymers in total can comprise from about 60 weight percent to about 90 weight percent of the coating 10, or from about 70 weight percent to about 80 weight percent of the coating 10.

The erosion resistant fillers of the coating 10 can comprise any material that increases the crack resistance of the overall coating 10. Exemplary erosion resistant fillers include, but are not limited to, alumina, silica, boron carbide, silicon carbide, titania, tungsten carbide, aluminium nitride, boron nitride, and silicon nitride. The one or more erosion resistant fillers in total can comprise from about 1 weight percent to about 7 weight percent of the coating 10, or from about 3 weight percent to about 5 weight percent of the coating 10.

The anticorrosive pigments of the coating 10 can comprise any material that helps prevent the corrosion of the overall coating 10. Exemplary anticorrosive pigments include, but are not limited to, zinc dust, zinc phosphates, iron sulphide, borates, precipitated silica and titanium dioxide. The one or more anticorrosive pigments in total can comprise from about 3 weight percent to about 9 weight percent of the coating 10, or about from 5 weight percent to about 7 weight percent of the coating 10.

The thixotropic agent or agents of the coating 10 can comprise any material that modifies the viscosity of the overall coating 10. Exemplary thixotropic agents include, but are not limited to, montmorillonite, mica and silicon fumes. The one or more thixotropic agents in total can comprise from about 1 weight percent to about 4 weight percent of the coating 10, or about from 2 weight percent to about 3 weight percent of the coating 10.

The porosity reducing filler materials of the coating 10 can comprise any filler material that decreases the porosity of the overall coating 10. Exemplary porosity reducing filler materials include, but are not limited to, barium sulphate, calcium sulphate, talc, and calcium carbonate. In some embodiments the porosity reducing filler materials can comprise one or more of the aforementioned fluorinated polymers, erosion resistant fillers, anticorrosive pigments and/or thixotropic agents. The one or more porosity reducing filler materials in total can comprise from about 1 weight percent to about 4 weight percent of the coating 10, or about from about 2 weight percent to about 3 weight percent of the coating 10.

In some embodiments, the coating 10 can comprise one or more additional materials. For example, the coating 10 may further comprise additional fillers including, but not limited to, carbon black. In some embodiments, the coating 10 may further comprise molybdenum sulfide, such as from about 5 weight percent to about 10 weight percent, to increase wear resistance. In some embodiments, the coating 10 may comprise from about 2 weight percent to about 5 weight percent graphite or bronze fines to reduce friction. In even some embodiments, the coating 10 may further comprise ceramic nanoparticles, (e.g., zirconia fines) for up to 10 weight percent to increase compressive strength. While certain elements have been listed herein, it should be appreciated that these are non-limiting examples and other material(s) may additionally or alternatively be included.

Still referring to FIG. 1, the coating 10 can comprise a variety of thicknesses to protect an underlying substrate 15. For example, in some embodiments the coating 10 can be from about 10 µm to about 60 µm thick. In some embodiments, the coating 10 can comprise a plurality of layers. In such embodiments, each layer can comprise about 60 weight percent to about 90 weight percent of one or more fluorinated polymers; about 3 weight percent to about 5 weight percent of one or more erosion resistant fillers; about 5 weight percent to about 7 weight percent of one or more anticorrosive pigments; about 1 weight percent to about 4 weight percent of one or more thixotropic agents; and, about 2 weight percent to about 3 weight percent of one or more porosity reducing filler materials.

In some embodiments, the outer surface 17 of the substrate 15 may comprise the base alloy of the component itself such that the coating 10 is applied directly thereto. However, referring now to FIG. 2, in some embodiments, the outer surface 17 of the substrate may comprise one or more base coats 19 that were applied to the substrate 15 prior to applying the layer of coating 10 which itself comprises about 60 weight percent to about 90 weight percent of one or more fluorinated polymers, about 3 weight percent to about 5 weight percent of one or more erosion resistant fillers, about 5 weight percent to about 7 weight percent of one or more anticorrosive pigments, about 1 weight percent to about 4 weight percent of one or more thixotropic agents, and about 2 weight percent to about 3 weight percent of one or more porosity reducing filler materials as discussed above. The base coat 19 can comprise, for example, any coating that assists in the overall adhesion between the underlying substrate 15 and the subsequent coating(s) 10.

For example, a base coat 19 may comprise any material with galvanic compatibility with the substrate 15 to provide a supporting layer of protection in the event that the subsequently applied coating 10 is lost during operation. The base coat in such embodiments may comprise a thickness range, for example, of from about 5 µm to about 20 µm.

Furthermore, in some embodiments, the non fluorinated polymer elements of the coating can possess reduced particle size to assist in the functional properties of the overall coating. Specifically, the erosion resistant fillers, anticorrosive pigments, thixotropic agents and the porosity reducing filler materials can all have an average particle size ranging from nano to micron levels to less than or equal to about 50 µm. Furthermore, the erosion resistant fillers, anticorrosive pigments, thixotropic agents and the porosity reducing filler materials can have a maximum individual particle size less than or equal to about 100 µm. These combinations of elements with the aforementioned particle size distributions can combine to produce a coating with a plurality of functional properties including hydrophobicity and oleophobicity while still providing corrosion, erosion and fouling resistance to an underlying substrate 15. For example, the coating 10 can withstand elevated temperatures during operation. As used herein "withstand" refers to not showing significant signs of degradation after prolonged exposure to the elevated temperature. In some embodiments, the coating 10 can withstand temperatures of at least 300°C.

Furthermore, the coating can have a porosity of less than or equal to about 1 percent by volume and a surface roughness from about 5 Ra to about 20 Ra. The relatively low surface roughness can assist in meeting the aerodynamic requirements of the underlying substrate 15 such as when said substrate 15 comprises a compressor blade for a turbine.

As discussed above, the coating 10 can also be hydrophobic and oleophobic to help prevent the resident buildup of fluids such as water and oil. "Hydrophobic" refers to the physical property of a material that is water repellent. "Oleophobic" refers to the physical property of a material that is oil repellent. Specifically, surfaces with low surface energy for a foulant (e.g. water and/or oil) should have a high contact angle and should provide reduced adhesion with the foulant relative to a surface which is wet by the foulant or with which the foulant has low contact angle. As used herein, the term "contact angle" is the angle formed by a static liquid droplet on the surface of a solid material. The higher the contact angle, the less the interaction of the liquid with the surface. Thus, it is more difficult for the foulant to wet or adhere to the surface if the contact angle of the oil or other foulant with the surface is high. For example, the coating can have a contact angle of from about 90 degrees to about 140 degrees.

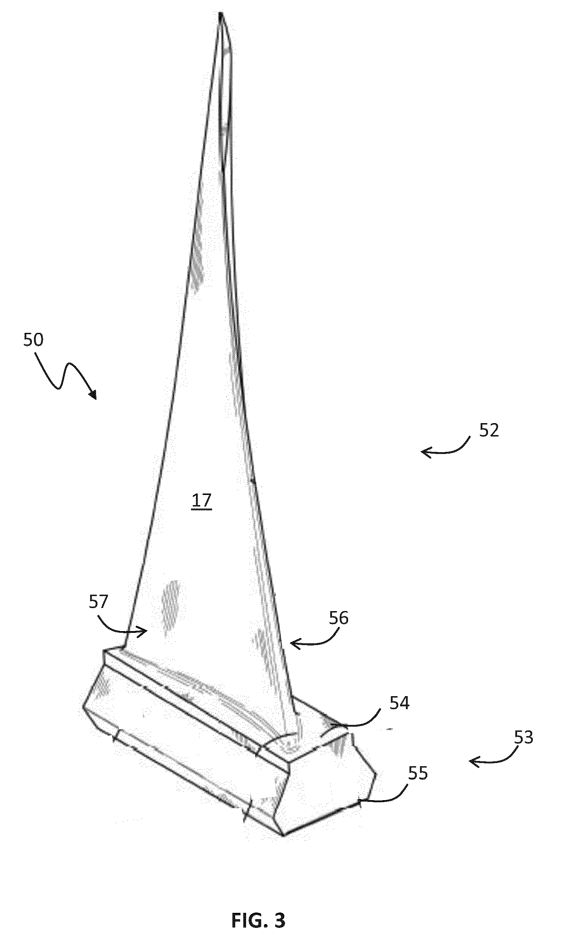

The substrate 15 of the coated article can comprise any metallic substrate 15 such as one utilized in a gas turbine. Metallic substrates can include, but not be limited to, iron based alloys (e.g., stainless steels), nickel based alloys, cobalt based alloys and the like. For example, referring now to FIG. 3, in some embodiments, the substrate can comprise a compressor blade 50. The compressor blade 50 can include an airfoil 52, which, when spun about the rotor, imparts kinetic energy to air flowing through the compressor, and a base or root 53. The airfoil 52 generally includes a suction-side 56 (i.e., convex-side) and a pressure-side 57 (i.e., concave-side).

The root 53 can include a platform 54, which is the outward radial face of the root 53 from which the airfoil 52 extends. The platform 54 may be integrally joined to the root 53 of the compressor blade 50. The platform 54 defines the radial inner boundary of the airflow across the airfoil 52. As one of ordinary skill in the art will appreciate, the root 53 further generally includes a dovetail 55 that connects via a complimentary groove in the rotor wheel (not illustrated) to secure the compressor blade 10 in the appropriate position within the compressor.

The substrate 15 (e.g., the compressor blade 50) can comprise the coating 10 covering at least a portion of the outer surface 17 (e.g., the suction-side 56 and/or the pressure-side 57) to form the coated article 10. The coating 10 of the coated article 5 can thus comprise about 60 weight percent to about 90 weight percent of one or more fluorinated polymers, about 1 weight percent to about 7 weight percent of one or more erosion resistant fillers, about 3 weight percent to about 9 weight percent of one or more anticorrosive pigments, about 1 weight percent to about 4 weight percent of one or more thixotropic agents, and about 1 weight percent to about 4 weight percent of one or more porosity reducing filler materials as discussed above.

In some embodiments where the substrate 15 comprises the compressor blade 50, the compressor blade 50 may comprise an early stage compressor blade 50. As used herein, "early stage" refers to one of the first few stages of the compressor section for the overall turbine. In such embodiments, the coating described herein can thereby provide a thin coating with a smooth surface to protect the compressor blade 50 without significantly impacting its aerodynamics when in operation.

The coating 10 may be applied to either new-make parts or serviced parts for modification (e.g., repair operations or the like). Furthermore, the coating 10 may be applied to the substrate 15 in the field or back at a service facility. In some embodiments, the coating 10 may be applied directly to the substrate 15. In other embodiments, the coating 10 may be applied to one or more other coatings (e.g., base coat(s)) already disposed on the substrate 15.

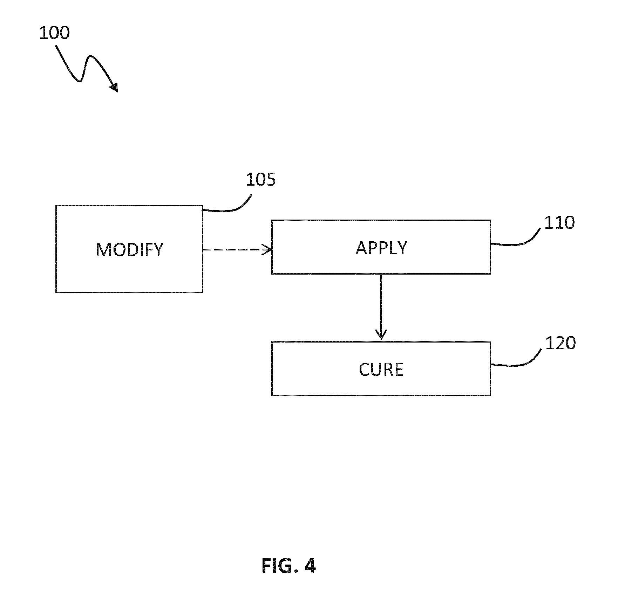

Referring now to FIG. 4, with additional reference to the structures illustrated in FIGS. 1-3, a method 100 is illustrated for coating a substrate 15 with a coating 10. The method 100 can first comprise applying a coating 10 onto an outer surface 17 of the substrate 15 in step 110, wherein the coating 10 comprises about 60 weight percent to about 90 weight percent of one or more fluorinated polymers, about 1 weight percent to about 7 weight percent of one or more erosion resistant fillers, about 3 weight percent to about 9 weight percent of one or more anticorrosive pigments, about 1 weight percent to about 4 weight percent of one or more thixotropic agents, and about 1 weight percent to about 4 weight percent of one or more porosity reducing filler materials.

The coating 10 applied in step 110 can be provided such that it has a suitable viscosity for sufficiently covering the substrate 15 and residing in place before curing. For example, in some embodiments, the coating 10 can have a viscosity of from about 0.1 Pascal-second to about 0.15 Pascal-second prior to curing as will become appreciated herein.

Applying the coating 10 in step 110 can be accomplished through any suitable means to cover the targeted area of the outer surface 17 of the substrate 15. For example, in some embodiments the coating 10 can be applied in step 110 through dipping, spraying, brushing and/or rolling.

The method 100 further comprises curing the coating 10 in step 120 on the outer surface of the substrate 15 at a curing temperature of from about 50°C to about 300°C. Curing in step 120 can occur for any period of time and at any combination of intervals, ramp rates, environmental conditions, etc., to provide sufficient cohesion between the coating 10 and the substrate 15 and/or any layers there between.

In some optional embodiments, the method 100 may further comprise modifying the outer surface 17 of the substrate 15 in step 105 prior to applying the coating 10 in step 110. Modifying the outer surface 17 can comprise any treatment, preparation or modification to the outer surface 17 that can help facilitate adhesion with the subsequently applied coating 10. For example, in some embodiments, modifying the outer surface 17 can comprise zinc phosphating, blast cleaning, water jetting or the like. In other embodiments, modifying the outer surface 17 can comprise applying a base coat 19 as should be appreciated herein.

In some embodiments, the method 100 may at least partially repeat one or more times such an additional layer of the coating 10 is applied. The additional layer can similarly comprise about 60 weight percent to about 90 weight percent of one or more fluorinated polymers, about 1 weight percent to about 7 weight percent of one or more erosion resistant fillers, about 3 weight percent to about 9 weight percent of one or more anticorrosive pigments, about 1 weight percent to about 4 weight percent of one or more thixotropic agents, and about 1 weight percent to about 4 weight percent of one or more porosity reducing filler materials. The additional layer may further be cured at a curing temperature to promote sufficient adhesion between the multiple layers of coating 10.

In some of these embodiments wherein a plurality of layers is applied, the curing temperature used for each additional cure step may increase at incremental levels. For example, the curing temperature can increase at least about 15°C and held for 15-30 minutes before applying an additional layer and repeating a similar curing temperature increase and hold time. Such embodiments can provide a plurality of thin coats with the increased cross-linking efficiency leading to increased durability of the overall coating 10.

It should now be appreciated that coatings may be provided to protect underlying substrates from a variety of external forces and environmental conditions. The coatings embodying the compositions presented herein can seal the surface of an underlying substrate to help suppress the penetration of corrosive vapors and liquids. Moreover, the coatings can be provided in a relatively thin layer with a smooth surface to protect the part without significantly affecting the aerodynamic properties of the application.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A coating comprising:
about 60 weight percent to about 90 weight percent of one or more fluorinated polymers;
about 1 weight percent to about 7 weight percent of one or more erosion resistant fillers;
about 3 weight percent to about 9 weight percent of one or more anticorrosive pigments;
about 1 weight percent to about 4 weight percent of one or more thixotropic agents; and,
about 1 weight percent to about 4 weight percent of one or more porosity reducing filler materials.

2. The coating of claim 1, wherein the one or more fluorinated polymers are selected from a group consisting of polytetrafluoroethylenes, perfluoroalkoxy polymers, ethylene tetrafluoroethylenes, polyvinylidene fluorides and polyvinyl fluorides.

3. The coating of claim 1 or claim 2, wherein the one or more erosion resistant fillers are selected from a group consisting of alumina, silica, boron carbide, silicon carbide, titania, tungsten carbide, aluminium nitride, boron nitride, and silicon nitride.

4. The coating of any preceding claim, wherein the one or more anticorrosive pigments are selected from a group consisting of zinc dust, zinc phosphates, iron sulphide, borates, precipitated silica and titanium dioxide.

5. The coating of any preceding claim, wherein the one or more thixotropic agents are selected from a group consisting of montmorillonite, mica, and silicon fumes.

6. The coating of any preceding claim, wherein the one or more porosity reducing filler materials are selected from a group consisting of barium sulphate, calcium sulphate, talc, and calcium carbonate.

7. The coating of any preceding claim, further comprising a plurality of layers, wherein each layer comprises about 60 weight percent to about 90 weight percent of one or more fluorinated polymers; about 1 weight percent to about 7 weight percent of one or more erosion resistant fillers; about 3 weight percent to about 9 weight percent of one or more anticorrosive pigments; about 1 weight percent to about 4 weight percent of one or more thixotropic agents; and, about 1 weight percent to about 4 weight percent of one or more porosity reducing filler materials.

8. The coating of any preceding claim, wherein the erosion resistant fillers, anticorrosive pigments, thixotropic agents and the porosity reducing filler materials all have an average particle size less than or equal to about 50 µm and have a maximum individual particle size less than or equal to about 100 µm

9. A coated article comprising:
a substrate piece comprising an outer surface; and
a coating covering at least a portion of the outer surface of the substrate piece, wherein the coating comprises:
about 60 weight percent to about 90 weight percent of one or more fluorinated polymers;
about 1 weight percent to about 7 weight percent of one or more erosion resistant fillers;
about 3 weight percent to about 9 weight percent of one or more anticorrosive pigments;
about 1 weight percent to about 4 weight percent of one or more thixotropic agents;
and,
about 1 weight percent to about 4 weight percent of one or more porosity reducing filler materials.

10. The coated article of claim 9, wherein the substrate piece comprises a compressor blade for a turbine.

11. The coated article of claim 9 or claim 10, wherein the outer surface of the substrate comprises a base coat such that the coating covers at least a portion of the base coat.

12. A method for coating a substrate with a coating, the method comprising:
applying a coating onto an outer surface of the substrate, wherein the coating comprises:
about 60 weight percent to about 90 weight percent of one or more fluorinated polymers;
about 1 weight percent to about 7 weight percent of one or more erosion resistant fillers;
about 3 weight percent to about 9 weight percent of one or more anticorrosive pigments;
about 1 weight percent to about 4 weight percent of one or more thixotropic agents; and,
about 1 weight percent to about 4 weight percent of one or more porosity reducing filler materials; and,
curing the coating on the outer surface of the substrate at a curing temperature of from about 50°C to about 300°C.

13. The method of claim 12, wherein the coating has a viscosity of from about 0.1 Pascal-second to about 0.15 Pascal-second prior to curing.

14. The method of claim 12 or claim 13, further comprising applying an additional layer of the coating, wherein the additional layer of the coating comprises:
about 60 weight percent to about 90 weight percent of one or more fluorinated polymers;
about 1 weight percent to about 7 weight percent of one or more erosion resistant fillers;
about 3 weight percent to about 9 weight percent of one or more anticorrosive pigments;
about 1 weight percent to about 4 weight percent of one or more thixotropic agents; and,
about 1 weight percent to about 4 weight percent of one or more filler materials; and,
curing the additional layer of the coating at an additional curing temperature of from about 50 °C to about 300 °C.

15. The method of claim 14, wherein the additional curing temperature is higher than the first curing temperature.
